(19) Europäisches Patentamt
European Patent Office
Office européen des brevets

(11) **EP 1 577 667 B1**

(12) **EUROPÄISCHE PATENTSCHRIFT**

(45) Veröffentlichungstag und Bekanntmachung des Hinweises auf die Patenterteilung:
**12.02.2014   Patentblatt 2014/07**

(51) Int Cl.:
***G01N 29/02*** *(2006.01)*

(21) Anmeldenummer: **04019776.6**

(22) Anmeldetag: **20.08.2004**

(54) **Verfahren zur Bestimmung der Massebelegung auf der Oberfläche von Oberflächenwellensensoren**

Method for determining the mass-coating on a surface of a SAW (surface acoustic wave) sensor

Procédé de détermination de la masse déposée sur une surface d'un capteur d'ondes acoustiques de surface

(84) Benannte Vertragsstaaten:
**AT BE BG CH CY CZ DE DK EE ES FI FR GB GR HU IE IT LI LU MC NL PL PT RO SE SI SK TR**

(30) Priorität: **11.02.2004   DE 102004006823**

(43) Veröffentlichungstag der Anmeldung:
**21.09.2005   Patentblatt 2005/38**

(73) Patentinhaber: **SAW Instruments GmbH 53177 Bonn (DE)**

(72) Erfinder:
 • **Tewes, Michael, Dr.**
  **53332 Roisdorf (DE)**
 • **Glass, Stefan**
  **47178 Duisburg (DE)**
 • **Schlensog, Marc Dominic, Dr.**
  **74182 Oberslum (DE)**
 • **Quandt, Eckhard, Dr.**
  **53177 Bonn (DE)**

(74) Vertreter: **Nordmeyer, Philipp Werner df-mp Fünf Höfe Theatinerstraße 16 80333 München (DE)**

(56) Entgegenhaltungen:
EP-A- 0 361 729     US-A- 5 235 235
US-B1- 6 247 354

 • RICCO A J ET AL: "Multiple-frequency surface acoustic wave devices as sensors" 90 IEEE SOLID STATE SENS ACTUATOR WORKSHOP; TECHNICAL DIGEST, 1990 SOLID-STATE SENSOR AND ACTUATOR WORKSHOP, 4. Juni 1990 (1990-06-04), Seiten 5-8, XP010000723
 • MARTIN S J ET AL: "Effective utilization of acoustic wave sensor responses: simultaneous measurement of velocity and attenuation" CONFERENCE PROCEEDINGS ARTICLE, 3. Oktober 1989 (1989-10-03), Seiten 621-625, XP010090696
 • DUNHAM G C ET AL: "DUAL QUARTZ CRYSTAL MICROBALANCE" ANALYTICAL CHEMISTRY, AMERICAN CHEMICAL SOCIETY. COLUMBUS, US, Bd. 67, 1995, Seiten 267-272, XP000861538 ISSN: 0003-2700
 • MARTIN S J ET AL: "CHARACTERIZATION OF A QUARTZ CRYSTAL MICROBALANCE WITH SIMULTANEOUS MASS AND LIQUID LOADING" ANALYTICAL CHEMISTRY, AMERICAN CHEMICAL SOCIETY. COLUMBUS, US, Bd. 63, Nr. 20, 15. Oktober 1991 (1991-10-15), Seiten 2272-2281, XP000577312 ISSN: 0003-2700
 • KONDOH J ET AL: "Simultaneous measurements of liquid properties using multichannel shear horizontal surface acoustic wave microsensor" JPN J APPL PHYS PART 1 REGUL PAP SHORT NOTE REV PAP; JAPANESE JOURNAL OF APPLIED PHYSICS, PART 1: REGULAR PAPERS & SHORT NOTES & REVIEW PAPERS MAY 1996 JJAP, MINATO-KU, JAPAN, Bd. 35, Nr. 5B, 27. November 1995 (1995-11-27), Seiten 3093-3096, XP002449880

EP 1 577 667 B1

**Beschreibung**

Die vorliegende Erfindung betrifft ein Verfahren zur Bestimmung der Masse eines Analyten, der auf einer mit einem den Analyten enthaltenden Fluid beaufschlagten Oberfläche eines Oberflächenwellensensors abgeschieden wird, wobei der Sensor eine sendende Elektrodenstruktur aufweist, mit der eine Schwingung auf der Oberfläche angeregt wird, wobei der Sensor eine empfangende Elektrodenstruktur aufweist, mit der eine veränderte Schwingung aufgenommen wird, wobei die Veränderung zwischen der ursprünglichen und der aufgenommenen Schwingung, insbesondere die Veränderung in der Amplitude und/oder der Phase, registriert und als Messsignal oder Sensorsignal ausgegeben wird und wobei aus dem Messsignal auf die auf der Oberfläche abgeschiedene Masse des Analyten geschlossen wird.

Bekanntermaßen werden derartige akustischen Oberflächenwellen- oder SAW- ("Surface Accoustic Wave") Sensoren zum Nachweis von Massenbelegungen und zur Messung physikalischer Eigenschaften von Flüssigkeiten eingesetzt. Dabei wird meist durch eine Kammelektrode, die von einem IDT (Interdigitaltransducer) gebildet wird, eine Oberflächenwelle auf einem piezoelektrischen Substrat erzeugt, die nach dem Durchlaufen einer gewissen Messstrecke wiederum von einem baugleichen IDT aufgenommen wird. Dabei wird die Ausbreitung der Oberflächenwelle von der die Oberfläche benetzenden Flüssigkeit beeinflusst, wobei sich aus der Größe der Beeinflussung, insbesondere aus der Phasen- und Amplitudenverschiebung der Welle, Rückschlüsse auf die Dichte und die Viskosität der Flüssigkeit, sowie auf die Masse der Ablagerung ziehen lassen. So bedingt die Änderung der Viskosität und der Dichte im Wesentlichen eine Amplitudenänderung und eine (geringe) Phasenverschiebung, während eine Ablegerung auf der Oberfläche eine reine Phasenverschiebung hervorruft.

Derartige Sensoren werden auch als Mikrowaagen in der Mikrobiologie zur Bestimmung von Massen eingesetzt, die auf der Oberfläche binden. Dazu werden auf der Oberfläche Rezeptoren aufgebracht, die gesuchte Biomoleküle spezifisch binden. Solche Messungen können "in Echtzeit" durchgeführt werden, wobei die Sensoroberfläche kontinulerlich von einer Flüssigkeit überspült wird, in die zu einem gewissen Zeitpunkt die zu untersuchende Substanz Injiziert wird. Dabei tritt das Problem auf, dass sich im zeitlichen Verlauf kurz nach der Injektion mehrere Parameter ändern. Diese "Quereinflüsse" müssen dann bei der Auswertung der Messung berücksichtigt werden, um einen korrekten Wert für die interessierende abgeschiedene Masse zu erhalten. Im Wesentlichen sind dabei drei Effekte zu berücksichtigen:

Zunächst ändert sich durch die Injektion zumeist die Dichte und die Viskosität der Flüssigkeit, was, wie oben i angedeutet, mit einer Amplitudenänderung des Messsignales einhergeht. Zudem kann sich die dielektrische Eigenschaft der Flüssigkeit ändern, was zu einem elektrischen "Übersprechen" der mit Flüssigkeit benetzten IDTs führt. Dabei resultiert das Übersprechen daraus, dass das empfangene Signal nicht nur von der mechanischen Komponente, die sich auf der Oberfläche ausbreitet, sondern auch von einer elektromagnetischen und/oder einer elektrischen Komponente, die sich durch die Flüssigkeit von einem IDT zum anderen ausbreitet, beeinflusst wird. Zuletzt wird das empfandene Signal durch die sich auf der Oberfläche ablagernden Masse beeinflusst. Ein über eine Zeit aufgenommenes Signal ist eine Summe dieser Komponenten.

Es ist bekannt, die Einflüsse der sich ändernden dielektrischen Eigenschaften der zu messenden Analyt-Lösung durch speziell ausgebildete Flusszellen über den Oberflächenwellen zu minimieren. Das führt jedoch zu hohen Verlusten der Signalintensität. Weiterhin kann der Einfluss der elektrischen Leitfähigkeit Ober die Laufzeit des Signals zwischen Eingangssignal und Ausgangssignal getrennt werden, wobei dazu ein Netzwerkanalysator verwendet wird. Alle diese Lösungen zur Trennung der elektrischen Eigenschaften des zu analysierenden Mediums von der Massebelegung der Sensoroberfläche sind zeitaufwendig und aufwendig in der technischen Umsetzung.

Darüber hinaus zeigt sich in der Praxis, dass unter identischen Bedingungen auf dem gleichen Substrat hergestellte SAW-Sensoren gerade bei Messungen in Flüssigkeiten deutliche Unterschiede in ihrer Sensitivität aufweisen. Der Einfluss von Leitfähigkeitsveränderungen der Flüssigkeit oberhalb der Sensoroberfläche ist sogar zwischen einzelnen Sensoren eines Sensorarrays unterschiedlich. Dabei wäre ein identisches Verhalten von mehreren Sensoren die Grundvoraussetzung für die Entwicklung eines SAW-Sensorarrays für biochemische Messungen in biologischen Pufferlösungen. So können die Sensorsignale zu jedem Zeitpunkt einer Messung nur bei gleicher Sensitivität auf die verschiedenen Mess- bzw. Störgrössen direkt miteinander verglichen oder ein Signal als Referenzsignal verwendet werden. Insbesondere kann bei gleicher Sensitivität der Referenzkanal bei biologischen Messungen zum Herausrechnen von Sensorsignalen aufgrund unspezifischer Bindung oder variierenden Analytlösungen (Puffersprünge) verwendet werden. Weiter ist aus dem Artikel Ricco A. et al: "Multiple-frequency surface acoustic wave devices as sensors" 90 IEEE Solid state sens actuator workshop; Technical Digest, 1990 solid-state sensor and actuator workshop, 4. Juni 1990 und aus US 5,235,235 bekannt, dass das Ergebnis der Messung von Massenbelegung mittels SAW-Sensoren von der anregenden Frequenz abhängig ist.

Aufgabe der Erfindung ist es nunmehr, ein Verfahren zum Betrieb eines derartigen Sensors, insbesondere zur Auswertung des Sensorsignals zu schaffen, das sich mit einfachen Mitteln kostengünstig umsetzen lässt und das eine referenzfreie und genaue Messung der Massebelegung unter Fluideinfluss mittels solcher Sensoren erlaubt. insbesondere ist es die Aufgabe der Erfindung, störende Quereinflüsse vom Sensorsignal derartiger SAW-Sensoren für eine referenzfreie Messung in Flüssigkeiten abzutrennen.

Diese Aufgabe wird gelöst durch das Verfahren mit den kennzeichnenden Merkmalen des Anspruch 1. Merkmale besonderer Ausführungsformen des Verfahrens sind in den Unteransprüchen genannt.

Wie aus dem Kennzeichen des Anspruch 1 ersichtlich, liegt der wesentliche Grundgedanke der Erfindung darin, das Messsignal rechnerisch um den Anteil zu korrigieren, der auf das elektrische "Übersprechen" zurückzuführen ist, wobei als Nutzsignal ein Signalanteil verbleibt, der von der Massenbelegung bestimmt ist. Dabei wird der auf die Änderung der dielektrischen Eigenschaften, insbesondere der elektrischen Leitfähigkeit, zurückzuführende Signalanteil vorteilhafterweise dadurch ermittelt, dass mehrere Messsignale bei jeweils einer anderen anregenden Frequenz aufgenommen werden.

Der besondere Vorteil des erfindungsgemäßen Verfahrens liegt darin, dass mit geringem messtechnischen und zeitlichen Aufwand eine erhebliche Korrektur der Messwerte vorgenommen werden kann, so dass schnelle und präzise Messung von Massebelegungen auf SAW-Sensoren durchgeführt werden können. Mit dem Verfahren ist es auch möglich, die zwangsläufig unterschiedlichen Charakteristika der vielen auf einem Array angeordneten Sensoren zu egalisieren, so dass Messungen mit solchen Sensorarrays, wie sie in der Mikrobiologie Anwendung finden, einfach und schnell ausgewertet werden können. Gerade für den Einsatz solcher Sensorarrays bietet das Verfahren erhebliche Vorteile. Nachfolgend werden zu bevorzugende Ausführungsformen des Verfahrens dargestellt:

Zunächst ist es vorteilhaft, das verstärkte Messsignal als vektorielle, insbesondere als komplexe Größe $Z = I + iQ$, aufzufassen. Das Messsignal hat im Verhältnis zum Ursprungssignal, das vor der Zugabe des Analyten gemessen worden ist, die Phasenverschiebung $\Delta\varphi(t)$ und die Amplitudenänderung $\Delta I(t)$. Zur Trennung der viskosen und der elektrischen Anteile des Messsignals von der Massenbelegung der Oberfläche werden erfindungsgemäß zwei Messsignale für zwei verschiedene Frequenzen aufgenommen und der Realteil und der Imaginärteil $Z_j = I_j + iQ_j$ des Messsignals für die Frequenzen $(j=1, 2)$ bestimmt. Statt der sonst bei einer Frequenz üblichen Darstellung von Phase und Amplitude des komplexen Signals $Z(t)$ gegen die Messzeit wird nun die Differenz $Z_1 - Z_2$ als Messsignal verwendet. Durch diese Differenzbildung fällt der von der Frequenz unabhängige Anteil des Messsignals, der aus dem elektrischen Übersprechen resultiert, aufgrund der elektrischen Eigenschaften der Flüssigkeit aus dem Sensorsignal heraus.

$$Z_i = Z^{elektrisch} + Z_i^{masse+viskosit\ddot{a}t}$$

$$Z = Z_1 - Z_2 = Z_1^{masse+viskosit\ddot{a}t} - Z_2^{masse+viskosit\ddot{a}t}$$

Als Ergebnis der Subtraktion ergibt sich das "Nutzsignal" $Z_N = Z_1 - Z_2$, nun getrennt in Phase und Amplitude als Messsignal weiterverarbeitet werden kann. Dabei ist es von Vorteil, dass das durch das Übersprechen erzeugte Zusatzsignal lediglich eine schwache Frequenzabhängigkeit aufweist, die im Rahmen der Genauigkeit der Messung vernachlässigt werden kann.

An dieser Stelle sei angemerkt, dass es vorteilhaft sein kann, technische Maßnahmen zu ergreifen, die einen direkten in Kontakt der zu messenden Substanz mit den Elektrodenstrukturen vermeiden. Ein solcher unmittelbarer Kontakt des im Fluid gelösten Analyten ist für die Messung somit nicht unbedingt notwendig.

Neben dem erfindungsgemäßen Gedanken, das Messsignal vom störenden Zusatzsignal, das durch Übersprechen erzeugt wird, zu befreien, ist es vorteilhaft ein weiteres Korrekturverfahren auf das Messsignal anzuwenden. Nach diesem weiteren Verfahren wird das Messsignal um den Signalanteil bereinigt, der auf den Viskositätseinfluss zurückzuführen ist. Dies wird durch die gleichzeitige Messung von Phasen- und Amplitudenänderung realisiert, die gefolgt ist von einer speziellen Zerlegung in den masseartigen und den viskositätsartigen Teil. Es sei hier betont, dass dieser zweite Gedanke unabhängig von dem oben dargestellten Verfahren der Mehrfrequenzmessung ist und somit eigenständig ohne vorherige Anwendung des ersten Korrekturverfahrens umgesetzt werden kann.

Dabei wird zunächst durch Messen einer Referenz das Verhalten des Sensors auf die Beaufschlagung mit einem Fluid ermittelt und als Eichgröße registriert. Dann wird bei der Messung eines Analyten das Messsignal aufgeteilt in einen von der Masseänderung verursachten Signalanteil und einen durch die Beschaffenheit des Fluids verursachten Signalanteil bevor die Signalanteile um die Eichgröße korrigiert werden. Diese Zerlegung des Messsignals $\Delta\varphi(t)$ in die Einflüsse der Viskosität $\Delta\varphi_{viskosit\ddot{a}t}$ und der Massebeladung $\Delta\varphi_{masse}$ sei nachfolgend erklärt:

Zu dieser Trennung bedarf es der Analyse der Intensität und der Phase des Sensorsignals, das sich wiederum als komplexes Messsignal $Z = Z_1 - Z_2$ ausdrücken lässt. Der nachfolgende Algorithmus zerlegt dabei die Phase $\varphi(t)$ des Messsignals unter Verwendung der Amplitude $I(t)$ in die zwei Signale $\Delta\varphi_{masse}(t)$ und $\Delta\varphi_{viskosit\ddot{a}t}(t)$, die den Verlauf der Massebelegung und des Puffersprungs aufgrund von Viskositätsänderungen der Flüssigkeit wiederspiegeln. Grundlage der Trennung bildet dabei eine insbesondere für den Sensor oder den Sensortyp einmalige Referenzmessung, die nach Injektion einer rein viskosen Flüssigkeit, z.B. mit schwerem Wasser oder glycerinhaltigem Puffer, durchgeführt wird.

Eine solche Veränderungen des Dichte-Viskositätsproduktes führt bei einer Auftragung des ln(I) gegen $\Delta\varphi$ zu einem linearen Zusammenhang, während, wie gesagt, eine reine Massebeladungen zu einer reinen Phasenänderung führt. Bei Injektion von Analytlösungen kann nun eine Addition der Phasenänderungen aufgrund des Puffersprungs und der Massebeladung beobachtet werden. Da Viskositäts-Dichte-Änderungen mit Amplitudenänderungen einhergehen, können beide Signale folgendermaßen aufgetrennt werden, wobei das Verhältnis zwischen Amplitude und Phasenverschiebung sensorspezifisch konstant ist:

$$e_1 = \frac{\Delta\varphi_V}{\sqrt{(\Delta\varphi_V)^2 + (\Delta\ln(I))^2}} \quad \vee \quad e_2 = -\frac{\Delta\ln I}{\sqrt{(\Delta\varphi_V)^2 + (\Delta\ln(I))^2}}$$

$$\Delta\varphi_{masse}(t) = \frac{e_2\,\varphi(t) - e_1\,\ln I(t)}{e_2} \quad \vee \quad \Delta\varphi_{viskosität}(t) = -\frac{\ln I(t)}{e_2}$$

dabei beschreiben $\Delta\varphi_V$ die Phasenverschiebung und $\Delta\ln I$ die logarithmierte Amplitudenänderung, die durch eine Referenzinjektion einer beliebigen viskosen Flüssigkeit für den jeweiligen Sensor ermittelt werden kann. Somit ergibt sich der Einheitsvektor $\underline{e}$ mit den Komponenten $e_1$ und $e_2$, der das Verhältnis zwischen Phasen- und Amplitudenänderung für reine Veränderungen des Viskositäts-Dichteproduktes beinhaltet. Mit dem Einheitsvektor können $\Delta\varphi_{viskosität}(t)$ und $\Delta\varphi_{masse}(t)$ als Komponenten des Gesamtsignals $\Delta\varphi(t) = \Delta\varphi_{masse}(t) + \Delta\varphi_{viskosität}(t)$ jederzeit getrennt berechnet werden.

Die mathematischen Hintergründe sind der Veröffentlichung von Martin et al., Anal. Chem. 63 (1991) 2272, zu entnehmen, auf die diesbezüglich vollinhaltlich Bezug genommen wird. Der erfindungswesentliche Gedanke beruht auf der Idee, den Puffersprung anhand der Ergebnisse einer ersten Eichmessung, bei der die Viskositätsänderung der Analytlösung nach Injektion einer viskosen Flüssigkeit aufgezeichnet wurde, mathematisch aus dem Messsignal herauszurechnen. Der Anwender bekommt dadurch unmittelbar zwei Informationen. Die eine betrifft den Anteil der Phasenverschiebung durch die Massenbelegung der Oberfläche. Die andere den Anteil der Phasenverschiebung aufgrund der Viskositätsänderungen der Flüssigkeit über der Sensoroberfläche aufgrund der Analytzugabe. Dabei wird keine Referenzzelle zum Abzug der elektrischen und viskosen Eigenschaften vom Sensorsignal benötigt. Das Verfahren ist dabei so schnell, dass es Messungen in Echtzeit erlaubt. Auf diese Weise kann die Dynamik des Ablagerungsprozesses beobachtet werden.

Mit jedem der erfindungsgemäßen Verfahrensschritten, die sich vorteilhafterweise ergänzen, ist eine referenzfreie Messung der Massenbelegung unter Einfluss eines Fluids, insbesondere einer Flüssigkeit, mit einem Oberflächenwellensensor möglich. Erfindungsgemäß werden Veränderungen des Messsignals, die durch das Einbringen der Testsubstanz über dem Sensor entstehen und nicht das gewünschte Messsignal darstellen, beseitigt. Bei Oberflächenwellensensoren wird somit einerseits die Veränderung der elektrischen Leitfähigkeit sowie die Veränderung des Viskositäts-Dichteproduktes andererseits berücksichtigt. Die dargestellte Korrektur des Signals um den Einfluss der elektrischen Eigenschaften in Kombination mit der Trennung des Signals in den viskosen und den masseartigen Anteil eröffnet die Möglichkeit einer referenzkanalfreien Messungen der Massenbelegung von Oberflächenwellensensoren.

Das erfindungsgemäße referenzfreie Verfahren hat den Vorteil, dass keine zusätzlichen Annahmen betreffend das System nötig sind und das Signal der eigentlichen Messzelle direkt ausgewertet werden kann. Die Erfindung verbessert damit die Anwendbarkeit von Oberflächensensoren in der Analytik.

Nachfolgend wird die Erfindung anhand der Figuren näher erklärt. Es zeigen:

**Figur 1**      einen Oberflächenwellensor mit Messzelle (schematisch),

**Figur 2**      Schaltung und Messprinzip eines Oberflächenwellensensors,

**Figur 3**      das Verhalten des Sensorsignals bei Variation der Frequenz und bei Beladung der Oberfläche mit starren Massen und Flüssigkeiten,

**Figur 4**      den Einfluss verschiedener Flüssigkeiten auf das Verhalten des Sensorsignale bei Variation der Frequenz um die Resonanzfrequenz,

**Figur 5** die Messungen der Phasenverschiebung von fünf Sensoren eines Arrays,

**Figur 6** die Phasenverschiebung der fünf Sensoren des Arrays bei Messung mit zwei Frequenzen,

**Figur 7** ein Diagramm mit reiner Viskositäts-Dichteänderung,

**Figur 8** Ergebnisverlauf einer realen Messung und

**Figur 9** Die Korrektur der realen Messung aus Figur 8.

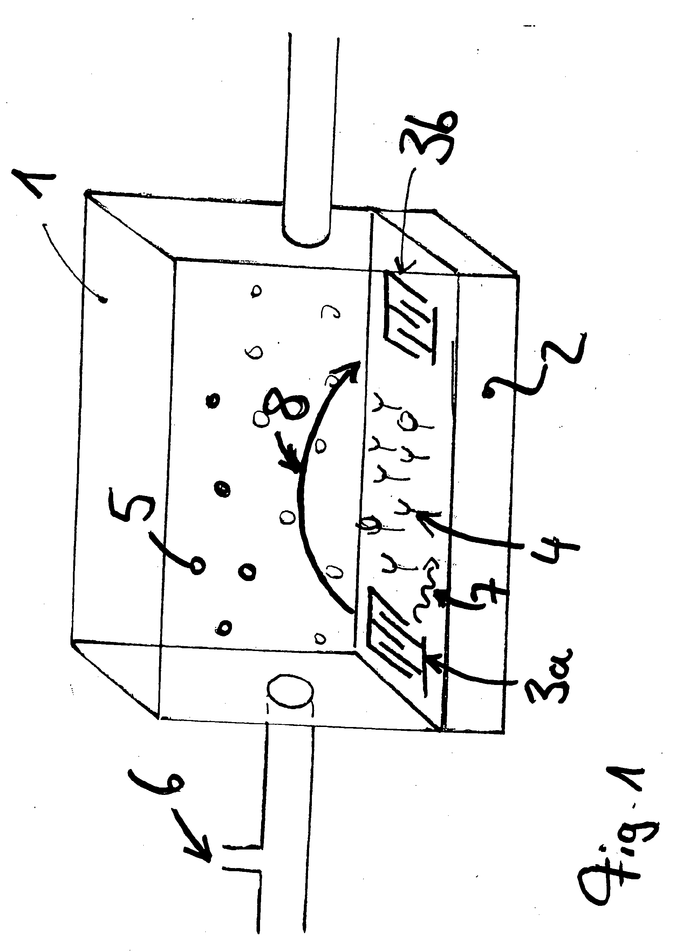

In Figur 1 ist ein Oberflächenwellensor mit darüber angeordneter Messzelle 1 gezeigt, die mit einer flüssigen Lösung befüllt ist. Der Oberflächenwellensor hat ein piezoelektrisches Substrat 2, auf dem zwei als IDT (Interdigital Transducer) ausgebildete Kammelektroden 3a und 3b aufgebracht sind. Mittels der IDTs werden akustische Wellen an der Oberfläche des Substrats 2 durch elektrische Wechselfelder erzeugt. Dabei wird die eine Kammelektrode 3a als Sender und die andere 3b als Empfänger der Oberflächenwelle 7 genutzt. Nach dem Durchlaufen einer Strecke im oder an der Oberfläche des Kristalls werden die akustischen Wellen durch die zweite Kammelektrode 3b wiederum in ein elektrisches Signal umgewandelt. Auf der zwischen den Elektroden 3 befindlichen Oberfläche des Substrats 2 haften Rezeptoren 4 für die zu bestimmenden Biomoleküle 5, die sich in der Messzelle 1 in Lösung befinden. Im Zulauf zu der Messzelle 1 ist ein Einlass 6 für die Injektion einer Probe vorgesehen.

Ist die Oberfläche des Substrats 2, das die Welle durchläuft, in Kontakt mit einem viskoelastischen Medium, so verändert sich Ausbreitungsgeschwindigkeit der Welle. Wird nun das Eingangssignal mit dem Ausgangssignal des Sensors verglichen, so können sowohl Dämpfungen der Signalstärke als auch Laufzeitänderungen der akustischen Welle als Sensorsignal gemessen werden. Das "Übersprechen" geschieht durch die Lösung hindurch entlang des Weges 8.

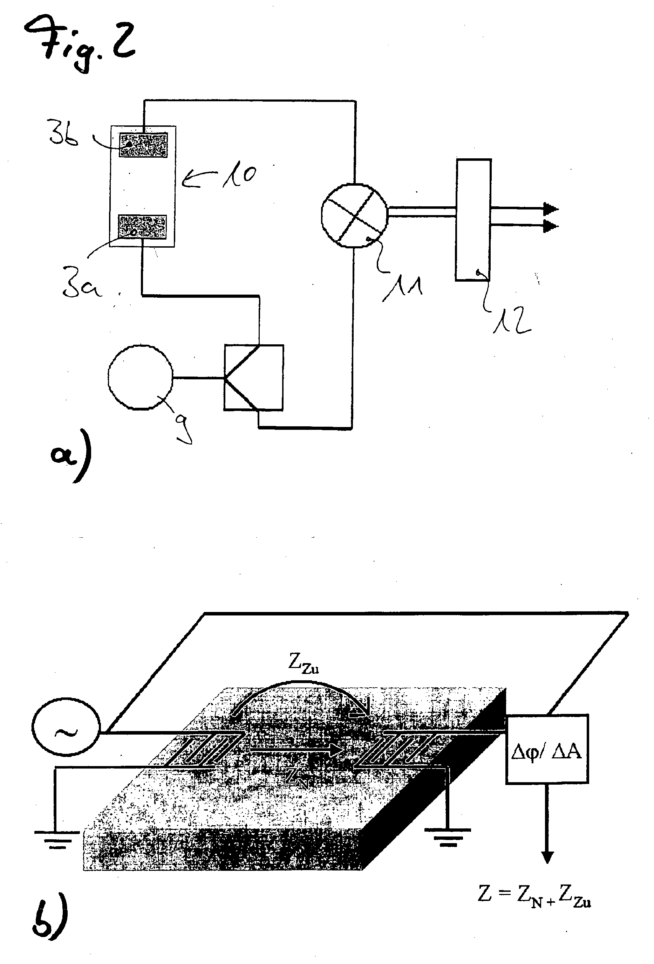

Die Schaltung für den in Figur 1 gezeigten Messaufbau für die Massendetektion ist in der Figuren 2a und 2b dargestellt. Dabei erzeugt ein auf eine feste Frequenz eingestellter Oszillator 9 ein elektrisches Wechselsignal mit konstanter Amplitude, wobei die feste Frequenz nahe der Resonanzfrequenz liegt. Über die Elektrode 3a des Sensorelementes 10 wird eine Oberflächenwelle in dem piezoelektrischen Material 2 erzeugt. Nach Durchlaufen der eigentlichen Sensoroberfläche wird das akustische Signal wiederum über den baugleichen Interdigitalwandler 3b in ein elektrisches Wechselstromsignal umgewandelt. Dabei führt eine Massebelegung der Oberfläche zwischen den Interdigitalstrukturen zu einer Phasenverschiebung $\Delta\varphi$ der Signale sowie zu einer Amplitudenänderung $\Delta A$ (Figur 2b), wobei die Phasenverschiebung des Signals über einen IQ-Demodulator 11 und einem Komparator 12 detektiert und ausgegeben. Erfindungsgemäß wird die Messung mit mehreren Frequenzen durchgeführt.

Bei derartigen Sensoren werden die Frequenz-/Phasenverschiebung sowie die zusätzliche Dämpfung der akustischen Wellen als Messsignal verwendet. Die Phasenverschiebung ist dabei proportional zur Frequenzverschiebung der Resonanzfrequenz des SAW-Sensors und hängt folgendermaßen mit der Bedeckung der Oberfläche durch eine Masse oder/und der Benetzung der Oberfläche durch ein Fluid zusammen:

$$(1) \qquad \Delta\varphi \;\approx\; S_\varphi \left( \rho_m h_m + \sqrt{\frac{\rho_l \eta_l}{2\pi f}} \right)$$

Dabei ist $\rho_m$ die Dichte der an der Oberfläche gebundenen, starren Massenschicht und $h_m$ deren Höhe, $\rho_l$ und $\eta_l$ sind die Dichte und die Viskosität der an die Oberfläche respektive an die starre Massenschicht angrenzenden Flüssigkeit. $S_\varphi$ ist der Sensitivitätsfaktor, der im Idealfall nur schwach frequenzabhängig und bei verschiedenen Sensoren gleicher Bauart identisch ist. Die Amplitude der Oberflächenwelle nimmt zwischen den IDTs exponentiell ab. Eine optisch dünne, starre Massenschicht führt nicht zu einer zusätzlichen Dämpfung der Welle, während für eine Beladung der Oberfläche mit einer Flüssigkeit gilt :

$$(2) \qquad \Delta A \;\approx\; S_A \sqrt{\rho_l \eta_l}$$

Das Sensorsignal wird nachfolgend als Nutzsignal bezeichnet, das durch eine Veränderung der Ausbreitungsgeschwindigkeit der akustischen Welle im Kristall entsteht. Das in Figur 2a eingezeichnete Zusatzsignal $Z_{Zu}$ gibt dagegen, wie schon dargelegt, durch elektrisches Übersprechen ein mögliches zusätzliches Signal zwischen den IDT-Strukturen.

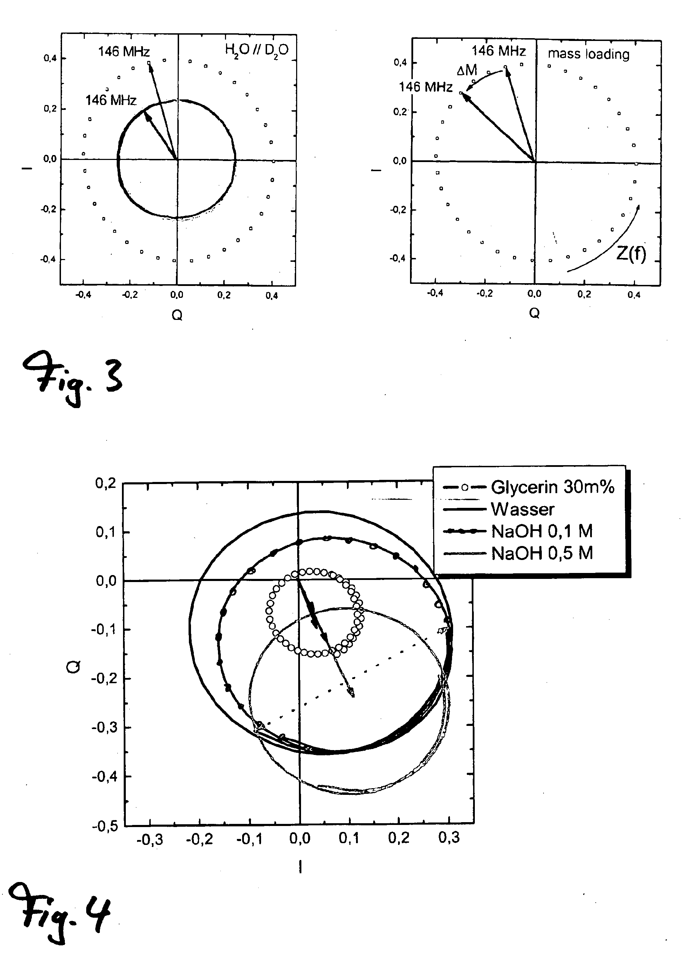

Die Einflüsse von Massebeladungen und Flüssigkeitseigenschaften sind für den Idealfall eines reinen Nutzsignals mit $Z = Z_N$ in Figur 3a dargestellt. Aufgetragen sind die Messpunkte $Z(f) = I(f) + i \, Q(f)$ bei einer Variation der Frequenz um die Resonanzfrequenz des Sensors von $f_R \approx 146$ MHz. Die Messpunkte sind in der komplexen Ebene dargestellt, wobei jeder dargestellte Messpunkt einer Frequenz f im Bereich 145,5 < f <146,5 MHz entspricht. Für Messung bei einer festen Frequenz ändert sich nun bei einer reinen Massebeladung (Figur 3b) die komplexe Messgröße Z im Sinne von Gleichung (1), wobei es zur Verschiebung der Phase des Messsignals auf dem angedeuteten Kreis mit identischem Radius R kommt. Der Einfluss einer Flüssigkeit führt zu einer Dämpfung des Signals nach Gleichung (2). Das bedeutet, dass der Radius, auf dem die Messpunkte liegen, kleiner wird, wobei es entsprechend Gleichung (1) zusätzlich zu einer Drehung um einen Winkel $\Delta\varphi$ kommt.

Die Sensitivität der SAW-Sensoren hängt bei der Messung in Resonanz in erster Näherung nur von physikalischen Größen des Sensors ab, wie z.B. der Lauflänge der Welle über die Substratoberfläche. Bei der Messung der Phasenverschiebung auf einer festen Frequenz geht jedoch die Änderung der Phase mit der Frequenz in die Sensitivität mit ein, wobei jedoch keine exakte Proportionalität zwischen $S_\varphi$ und $d_\varphi$ / df beobachtet wird. Nichtlinearitäten im Verlauf der $\varphi(f)$ Spektren führen daher zu Variationen der Sensitivität bei Messung mit verschiedenen Frequenzen und insbesondere bei der Messung mit verschiedenen Sensoren.

Aufgrund der starken Dämpfung der Oberflächenwelle in Fluiden ist das Nutzsignal $Z_N$, das durch Laufzeitunterschiede der akustischen Welle und der dabei entstehenden Dämpfung zustande kommt, klein. Stör- und Zusatzsignale $Z_{Zu}$, wie durch das Übersprechen, werden durch das Überspülen des Sensors mit leitfähigen Fluiden dagegen verstärkt. Dies gilt insbesondere bei der Messung in biologischen Puffern, welche oft Salzkonzentrationen im Bereich einiger hundert Millimolar oder nichtneutrale pH-Werte aufweisen. Dieser Effekte ist meist nicht vernachlässigbar, auch wenn durch technische Maßnahmen, wie beispielsweise durch spezielle Flusszellen, verhindert wird, dass Flüssigkeiten nicht in direkten Kontakt mit den IDTs kommen.

In Figur 4 sind Spektren in der komplexen Darstellungsweise gezeigt, die mittels Frequenzvariation um die Resonanzfrequenz herum für verschiedene Fluide aufgenommen wurden. Die gezeigten Messungen wurden an einem Love-Wave Sensor mit zwei kammartigen Elektroden durchgeführt. Eine Flusszelle zur Zuführung von Analytlösungen überdeckt sowohl die sensitive Fläche des Sensors zwischen den IDTs als auch die beiden Elektrodenstrukturen. Die nachfolgende Diskussion ist jedoch allgemein gültig.

Wie Figur 4 zeigt, verschiebt ein Überspülen mit Wasser bereits den Ursprung des Kreises der Messsignale relativ zum Ursprung des Koordinatensystems. Wird nun Glycerin oder 0,1 M NaOH über den Sensor geleitet, verschiebt sich der Mittelpunkt noch weiter vom Ursprung, während, wie beim Kontakt mit der Flüssigkeit zu erwarten war, der Radius der Kreise abnimmt. Es zeigt sich somit, dass sich mit steigender Konzentration von Ionen innerhalb der Flüssigkeit die Verschiebung des Mittelpunktes vom Ursprung durch zunehmenden Einfluss des elektrischen Übersprechens der Interdigitalwandler auf das Messsignal erhöht.

Es zeigt sich, dass das Messsignal insbesondere bei kleinen Kreisradien aufgrund hoher Einfügungsdämpfung bei der elektrisch-akustischen Signalwandlung oder aufgrund hochviskoser Flüssigkeiten mehr und mehr durch das elektrische Übersprechen dominiert wird. Das zusätzliche komplexe Messsignal $Z_{Zu}$ ist im Bereich um die Resonanzfrequenz jedoch nahezu frequenzunabhängig, was sich aus der Tatsache ableitet, dass die Kreisform des Spektrums im gewählten Frequenzbereich erhalten bleibt. In erster Näherung entspricht das elektrische Übersprechen somit einem frequenzunabhängigem komplexen Signal $Z_{Zu}$.

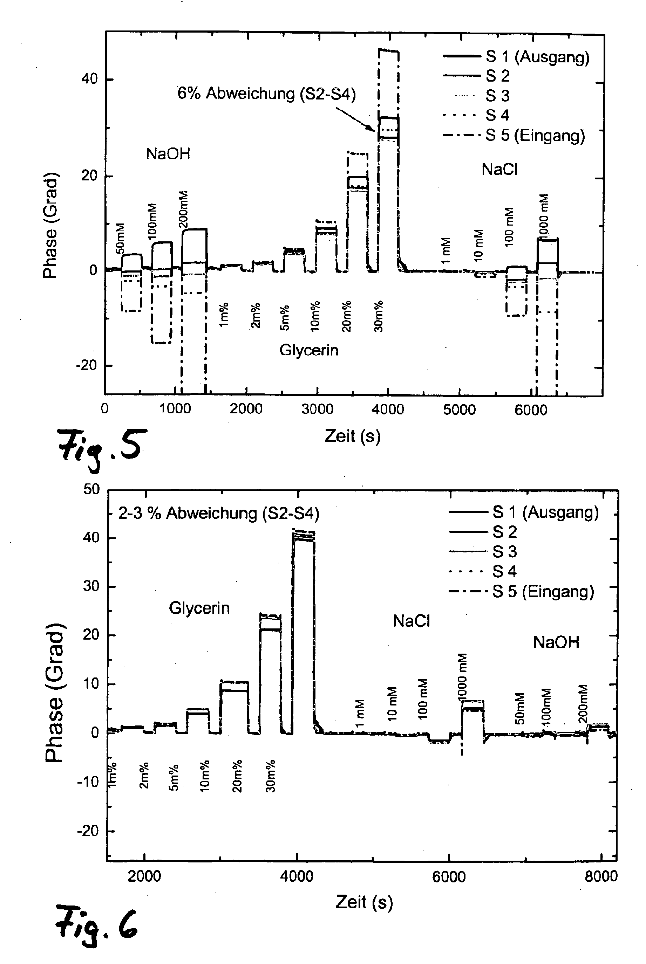

Der Einfluss des Übersprechens auf die Phasenverschiebung wird in Figur 5 verdeutlicht. Aufgetragen ist die gemessene Phasenverschiebung als Funktion der Zeit beim Überspülen von fünf identisch präparierten Love-Wellen-Sensoren S1 bis S5, die auf einem 2 x 2 cm großem Quarzsubstrat realisiert wurden und mit verschiedenen Flüssigkeiten überspült wurden. Die Messungen wurden bei einer festen Frequenz im Bereich der Resonanzfrequenz $f_R \approx 146$ MHz durchgeführt. Die Glycerininjektionen zu Beginn zeigen, dass alle Sensoren zwar, wie nach Gleichung (1) erwartet wird, Messsignale proportional zum steigenden Viskositäts-Dichteprodukt der Flüssigkeit aufweisen. Jedoch ist der Proportionalitätsfaktor S, der die Sensitivität des Sensors bestimmt, offensichtlich unterschiedlich.

Verändert sich nicht nur der Parameter Dichte/Viskosität, sondern auch noch die elektrischen Leitfähigkeit des Fluides, wie bei unterschiedlichen NaCl-Lösungen und pH-Shifts, so kommt es zu einer vektoriellen Addition der Signale $Z_N$ und $Z_{Zu}$ wegen des zunehmenden Einflusses des Übersprechens zwischen den IDTs auf allen Sensoren. Stimmt nun entweder die Phase zu Beginn der Messungen auf allen Sensoren nicht hundertprozentig überein oder/und unterscheiden sich die Signale $Z_{el}$ in Betrag und Phase geringfügig, so kommt es zu dem beobachteten Auseinanderdriften der Sensorsignale für Phase und Amplitude.

Die Unterschiedliche Sensitivität der Sensoren bei Viskositäts-Dichte Änderungen der Flüssigkeit sowie die Unterschiede im Ansprechen der Sensoren auf die leitfähigen Fluide beschränken die Nutzung der SAW-Sensoren in Lösungen dramatisch, da keiner der Sensoren als Referenzsensor verwendet werden kann.

Wird nun, wie es die Erfindung vorsieht, nicht bei einer Frequenz, sondern bei mehreren, insbesondere bei zwei Frequenzen, deren Messpunkte idealerweise eine Phasenverschiebung von 180° aufweisen, gemessen, dann kann durch eine Differenzbildung der zwei komplexen Messsignale

$$Z = Z(f_1) - Z(f_2) = (Z_N(f_1) + Z_{Zu}) - (Z_N(f_2) + Z_{Zu}) = Z_N(f_1) - Z_N(f_2)$$

der frequenzunabhängige Anteil aus dem Messsignal eliminiert werden. Bei Masse- oder Flüssigkeitsänderungen an der Oberfläche bleibt damit eine Phasenänderung gemäß Gleichung (1). Figur 6 zeigt die Zweifrequenzmessung, die direkt im Anschluss an die Einfrequenzmessung aus Figur 5 mit den gleichen Testflüssigkeiten durchgeführt wurde.

Deutlich zu erkennen ist, dass die Unterschiede im Verhalten der Sensorsignale durch die Zweifrequenzmessung vermindert werden. Die Sensoren verhalten sich untereinander auch bei pH-Wert Änderungen nahezu identisch. Somit kann einer der Sensorkanäle als Referenz verwendet werden, um Flüssigkeitseigenschaften von z.B. Massezuladungen an Rezeptorbelegten Oberflächen abzuziehen.

Auch in Bezug auf die Glycerininjektionen verhalten sich die Sensoren bei der Zweifrequenzmessung deutlich gleichmäßiger. Dies liegt neben dem erläuterten Effekt des Übersprechens daran, dass die Sensitivitäten $S_\varphi(f)$ der Sensoren, die

aufgrund von Nichtlinearitäten im Verlauf $\varphi(f)$ leicht mit der Frequenz variieren, durch die Messung bei zwei Frequenzen gemittelt werden. Messungen auf mehreren Frequenzen würden daher die Gleichmäßigkeit der Sensitivität zwischen den einzelnen Sensoren noch weiter verbessern, erhöhen aber die Messzeit.

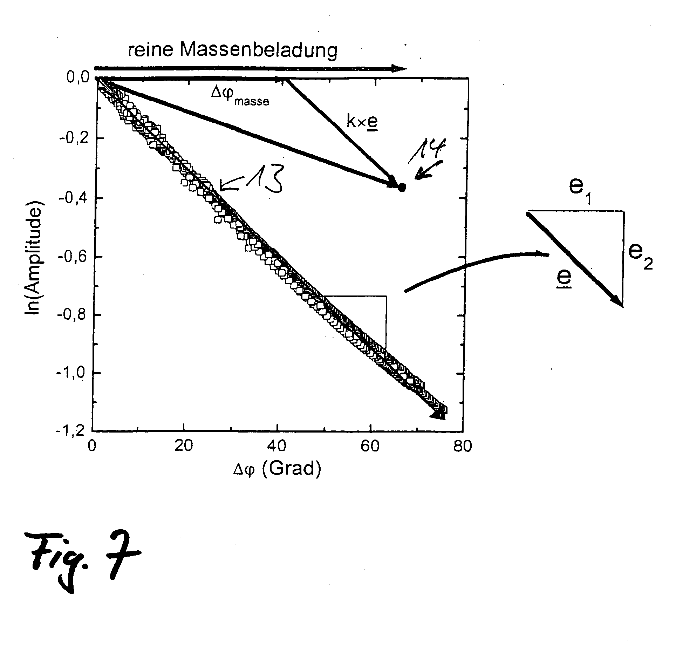

Anhand der nachfolgenden Figuren wird das weitere Korrekturverfahren dargestellt: Dabei zeigt das Diagramm nach Figur 7, dass reine Viskositäts-Dichteänderungen aufgrund der Dämpfung der Oberflächenwelle einen linearen Zusammenhang zwischen der Phasenverschiebung und der logarithmierten Amplitudenänderung ergeben. Aufgetragen ist der In der Amplitude gegen die Phasenverschiebung $\Delta\varphi$. Die Diagonale 13 wird gebildet von einzelnen Messpunkten, die für verschiedene Injektionen aufgenommen wurden. Der linearen Zusammenhang der Viskositäts-Dichteänderungen ist deutlich zu erkennen. Es ist zu beachten, dass Änderungen im Übersprechen durch Veränderung der Lösungen zu einem Abweichen vom linearen Verhalten führen können. In diesem Fall ist das Übersprechen vor der Zerlegung der Signale aus dem Messsignal zu eliminieren. Aus dieser Auftragung werden entsprechend der oben dargelegten mathematischen Zusammenhänge die Komponenten e1 und e2 des Einheitsvektors $\underline{e}$ ermittelt. Die vektorielle Addition, die von der gemessenen Diagonalen ausgeht, ist in dem Diagramm dargestellt.

Der so ermittelte Einheitsvektor $\underline{e}$ wird zur Bestimmung der reinen Massebeladung herangezogen. Dazu wird ein realer Messpunkt 14 im Diagramm vektoriell zerlegt in den der Massebeladung entsprechenden Anteil $\Delta\varphi_{masse}(t)$ und den durch die

Viskosität verursachten Teil $\Delta\varphi_{viskosität}(t)$. Letztendlich wird der Anteil $\Delta\varphi_{viskosität}(t)$ vom realen Messwert vektoriell abgezogen. Das funktioniert deshalb, weil eine reine Masseänderung auf der Oberfläche in reinen Phasenänderungen resultiert.

Während Analytinjektionen ergibt sich eine Addition beider Effekte die durch vektorielle Zerlegung eindeutig wieder in die einzelnen Anteile zerlegt werden kann. Dazu ist lediglich die Kenntnis des sensorspezifischen Einheitsvektors $\underline{e}$, der das Verhältnis zwischen Phasen und logarithmierter Amplitudenänderung repräsentiert, notwendig. Dieser wurde über eine vorangehende Injektion einer viskosen Flüssigkeit bestimmt.

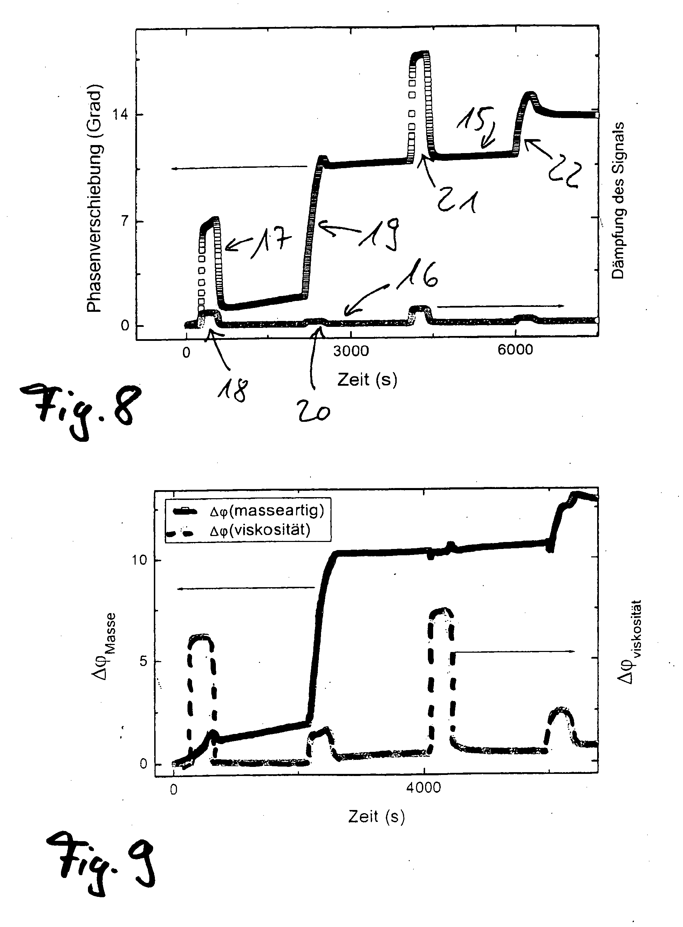

In Figur 8 ist das Ergebnis einer realen Messung aufgetragen, wobei die obere dunklere Kurve 15 die Phasenverschiebung und die untere hellere Kurve 16 die Dämpfung wiederspiegelt. Zur Kalibrierung des rein viskosen Sensorsignals wurde zunächst schweres Wasser mit einem hohen Viskositäts-Dichteprodukt injiziert, das einen deutlichen Peak 17 bezüglich der Phasenverschiebung verursacht. Der Abfall erklärt sich daraus, dass das schwere Wasser wieder aus der Messzelle ausgeschwemmt wird. Die Änderung der Viskosität geht auch mit einer kleinen Dämpfung 18 einher. Kurze Zeit später wird der Analyt, in diesem Fall Antikörper, injiziert, der wiederum einen starken Anstieg 19 verursacht. Da dieser fest an die Rezeptoren koppelt und somit nicht ausgeschwemmt wird, verbleibt die Phasenverschiebung auf einem Plateau. Nach Injektion des Analyten ist nur eine geringe Dämpfung 20 feststellbar. Nachfolgend wurde noch einmal schweres Wasser 21 und weiterer Analyt 22 zugeführt. Wie dargelegt entspricht schweres Wasser einem Puffersprung aufgrund reiner Viskositätsänderung, während es bei der Injektion von Antikörpern (50nM in Wasser) zu einer Massenbeladung der Sensoroberfläche und einem vergleichsweise geringen Puffersprung aufgrund einer Viskositätsänderung des Wassers kommt.

In Figur 9 ist nunmehr das nach dem angegebenen Algorithmus korrigierte Signal dargestellt. Dieser sorgt für eine Trennung des viskosen Anteils aufgrund des Puffersprungs während der Injektion von schwerem Wasser und Antikörpern. Zudem ist die Massenzunahme an der Oberfläche deutlich zu erkennen. In diesem Fall sind Diskontinuitäten im Verlauf der Injektion der Antikörper auf die nicht berücksichtigte Korrektur der elektrischen Leitfähigkeit zurückzuführen. Die Addition von Masse- und viskositätsartiger Phasenänderung ergibt wieder das ursprüngliche Sensorsignal $\Delta\varphi(t)$.

**Patentansprüche**

1. Verfahren zur Bestimmung der Masse eines Analyten, der auf einer mit einem den Analyten enthaltenden Fluid beaufschlagten Oberfläche eines Oberflächenwellensensors abgeschieden wird, wobei der Sensor eine sendende Elektrodenstruktur (3a) aufweist, mit der eine Schwingung (7) auf der Oberfläche (2) angeregt wird, wobei der Sensor eine empfangende Elektrodenstruktur (3b) aufweist, mit der eine veränderte Schwingung aufgenommen wird, wobei die Veränderung zwischen der ursprünglichen und der aufgenommenen Schwingung registriert und als Messsignal ausgegeben wird und wobei aus dem Messsignal auf die auf der Oberfläche (2) abgeschiedene Masse des Analyten (5) geschlossen wird, und wobei bei mindestens zwei verschiedenen Frequenzen angeregt und jeweils ein Messsignal aufgenommen wird,
   **dadurch gekennzeichnet,**
   **dass** aus dem Unterschied der Messsignale auf den durch die dielektrischen Eigenschaften des Fluids zurückzuführenden Signalanteil geschlossen wird, wobei das Messsignal um den Signalanteil korrigiert wird und wobei aus dem verbleibenden Nutzsignal die Massenbelegung bestimmt wird, dass die Messsignale als komplexe Größen $Z = I + i\,Q$ aufgefasst und rechnerisch verarbeitet werden, und dass zwei Messsignale für zwei verschiedene Frequenzen aufgenommen werden, dass die Realteile und die Imaginärteile $Z_j = I_j + i\,Q_j$ der Signale für die Frequenzen (j = 1,2) bestimmt werden und dass die Differenz $Z_1 - Z_2$ als Nutzsignal $Z_N$ ausgegeben wird.

2. Verfahren nach Anspruch 1,
   **dadurch gekennzeichnet,**
   **dass** die zwei Frequenzen so gewählt sind, dass die Phasenverschiebung zwischen den Messpunkten zumindest annähernd 180° beträgt.

3. Verfahren nach einem der vorherigen Ansprüche,
   **dadurch gekennzeichnet,**
   **dass** mehrere Sensoren ausgewertet werden, die insbesondere in einem Array angeordnet sind, wobei die Unterschiede in der Sensitivität S φ der Sensoren für Masse und Fluidbenetzungen durch Mittelung der Sensitivität bei Messung auf verschiedenen Frequenzen reduziert wird.

4. Verfahren nach einem der vorherigen Ansprüche,
   **dadurch gekennzeichnet,**
   **dass** mehrere Spektren aufgenommen und in komplexer Darstellungsweise aufgezeichnet werden, um das frequenzunabhängige Zusatzsignal zu ermitteln und vom Messsignal auf einer festen Frequenz abzuziehen.

5. Verfahren nach einem der vorherigen Ansprüche,
   **dadurch gekennzeichnet,**
   **dass** die sendende Elektrodenstruktur (3a) und die empfangende Elektrodenstruktur (3b) von zwei baugleichen Strukturen gebildet werden.

6. Verfahren nach einem der vorherigen Ansprüche,
   **dadurch gekennzeichnet,**
   **dass** die Strukturen (3a,3b) von Kammelektroden, insbesondere von IDT's gebildet werden.

7. Verfahren nach einem der vorherigen Ansprüche,
   **dadurch gekennzeichnet,**
   **dass** technische Maßnahmen ergriffen werden, mit denen ein direkter Kontakt der zu messenden Substanz mit den Elektrodenstrukturen vermieden wird.

8. Verfahren nach einem der vorherigen Ansprüche,
   **dadurch gekennzeichnet,**
   **dass** durch Messen einer Referenz das Verhalten des Sensors auf die Beaufschlagung mit einem Fluid ermittelt und als Eichgröße registriert wird, dass bei der Messung eines Analyten (5) das Messsignal aufgeteilt wird in einen von der Masseänderung verursachten Signalanteil und einen durch die Beschaffenheit des Fluids verursachten Signalanteil und dass die Signalanteile um die Eichgröße korrigiert werden.

9. Verfahren nach Anspruch 8
   **dadurch gekennzeichnet,**
   **dass** als Referenz ein rein viskoses Fluid eingesetzt wird, das keine an die Oberfläche des Sensors bindenden Anteile aufweist.

**10.** Verfahren nach Anspruch 8 oder 9,
**dadurch gekennzeichnet,**
**dass** als Referenz eine rein viskose Flüssigkeit (Newtonsches Fluid) und als Analyt eine Lösung eingesetzt werden.

**11.** Verfahren nach einem der vorherigen Ansprüche 8 bis 10,
**dadurch gekennzeichnet,**
**dass** als Verhalten des Sensors das sensorspezifisch konstante Verhältnis zwischen der Amplitude und der Phasenverschiebung ermittelt und registriert wird, wobei aus dem Verhältnis von der Amplitude zur Phasenverschiebung der Einheitsvektor e ermittelt wird mit den Komponenten

$$e_1 = \frac{\Delta\varphi_v}{\sqrt{(\Delta\varphi_v)^2 + (\Delta\ln(I))^2}} \text{ und } e_2 = -\frac{\Delta\ln I}{\sqrt{(\Delta\varphi_v)^2 + (\Delta\ln(I))^2}}$$

und wobei mit dem Einheitsvektor e die Komponenten

$$\Delta\varphi_{masse}(t)\frac{e_2\varphi(t) - e_1\ln I(t)}{e_2} \text{ und } \Delta\varphi_{viskosität}(t) = -\frac{\ln I(t)}{e_2}$$

berechnet werden, die sich zum Gesamtsignal $\Delta\varphi(t)$ addieren.

**Claims**

**1.** Method for determining the mass of an analyte that is deposited on a surface of a surface wave sensor, said surface having a fluid containing the analyte applied to it, wherein the sensor has a transmitting electrode structure (3a) with which a vibration (7) is excited on the surface (2), wherein the sensor has a receiving electrode structure (3b) with which a modified vibration is recorded, wherein the change between the original and the recorded vibration is registered and output as a measurement signal and wherein the measurement signal is used to determine the mass of the analyte (5) deposited on the surface (2), and wherein at least two different frequencies are excited and one measurement signal recorded in each case,
**characterized in that**
from the difference in the measurement signals, the signal component resulting from the dielectric properties of the fluid is determined, wherein the measurement signal is corrected by the signal component and wherein the surface density is determined from the remaining useful signal, that the measurement signals are interpreted as complex variables $Z = I + iQ$ and processed numerically, and that two measurement signals are recorded for two different frequencies, that the real parts and the imaginary parts $Z_j = I_j + iQ_j$ of the signals are determined for the frequencies (j=1,2) and that the difference $Z_1-Z_2$ is output as a useful signal $Z_N$.

**2.** Method according to Claim 1, **characterized in that** the two frequencies are selected such that the phase shift between the measuring points is at least approximately 180°.

**3.** Method according to any one of the preceding claims, **characterized in that** a plurality of sensors are evaluated, which are arranged in particular in an array, wherein the differences in the sensitivity $S_\Phi$ of the sensors to mass and fluid wetting properties are reduced by averaging the sensitivity of measurements at different frequencies.

**4.** Method according to any one of the preceding claims, **characterized in that** a plurality of spectra are recorded and stored as complex representations in order to determine the frequency-independent additional signal and to deduct it from the measurement signal at a fixed frequency.

**5.** Method according to any one of the preceding claims, **characterized in that** the transmitting electrode structure (3a) and the receiving electrode structure (3b) are formed by two identical structures.

6. Method according to any one of the preceding claims, **characterized in that** the structures (3a, 3b) are formed by comb electrodes, in particular by IDTs.

7. Method according to any one of the preceding claims, **characterized in that** technical measures are taken, with which a direct contact between the substance to be measured and the electrode structures is avoided.

8. Method according to any one of the preceding claims, **characterized in that** by measuring a reference, the behaviour of the sensor on the application of a fluid is determined and registered as a calibration value, that during the measurement of an analyte (5) the measurement signal is decomposed into a signal component caused by the change in mass and a signal component caused by the nature of the fluid, and that the signal components are corrected by the calibration value.

9. Method according to Claim 8, **characterized in that** a purely viscous fluid that has no components binding to the surface of the sensor is used as the reference.

10. Method according to Claim 8 or 9, **characterized in that** a purely viscous liquid (Newtonian fluid) is used as the reference and a solution is used as the analyte.

11. Method according to any one of the preceding Claims 8 to 10, **characterized in that** the behaviour of the sensor is determined and registered as the sensor-specific constant ratio between the amplitude and the phase shift, wherein from the ratio of the amplitude to the phase shift the unit vector $\underline{e}$ is determined with the components

$$e_1 = \frac{\Delta\varphi_v}{\sqrt{(\Delta\varphi_v)^2 + (\Delta\ln(I))^2}} \quad \text{and} \quad e_2 = -\frac{\Delta\ln I}{\sqrt{(\Delta\varphi_v)^2 + (\Delta\ln(I))^2}}$$

and wherein with the unit vector $\underline{e}$, the components

$$\Delta\varphi_{masse}(t)\frac{e_2\varphi(t) - e_1\ln I(t)}{e_2} \quad \text{and} \quad \Delta\varphi_{viscosity}(t) = -\frac{\ln I(t)}{e_2}$$

are calculated, which add together to form the total signal $\Delta\Phi(t)$.

**Revendications**

1. Procédé pour la détermination de la masse d'un analyte, lequel est déposé sur une surface alimentée par un fluide contenant l'analyte d'un capteur d'onde de surface, le capteur présentant une structure d'électrode d'émission (3a) avec laquelle une vibration (7) est excitée sur la surface (2), le capteur présentant une structure d'électrode de réception (3b) avec laquelle une vibration modifiée est captée, moyennant quoi la modification entre la vibration d'origine et la vibration captée est enregistrée et est délivrée en tant que signal de mesure et moyennant quoi on déduit, à partir du signal de mesure, la masse de l'analyte (5) déposée sur la surface (2), et moyennant quoi l'on excite avec au moins deux fréquences différentes et capte respectivement un signal de mesure,
**caractérisé en ce que**,
à partir de la différence entre les signaux de mesure, on en déduit la composante de signal devant découler des propriétés diélectriques du fluide, le signal de mesure étant corrigé de l'ordre de la composante de signal et moyennant quoi l'on détermine l'accumulation de la masse à partir du signal utile résiduel, **en ce que** les signaux de mesure sont considérés en tant que grandeurs complexes $Z = I + iQ$ et soumis à un traitement de calcul, et **en ce que** deux signaux de mesure pour deux fréquences différentes sont captés, **en ce que** l'on détermine les parts réelles et les parts imaginaires $Z_j = I_j + iQ_j$ des signaux pour les fréquences ($j = 1,2$) et **en ce que** l'on délivre la

différence $Z_1$-$Z_2$ en tant que signal utile $Z_N$.

**2.** Procédé selon la revendication 1, **caractérisé en ce que** les deux fréquences sont sélectionnées de manière à ce que le décalage de phase entre les points de mesure soit au moins environ de l'ordre de 180°.

**3.** Procédé selon l'une des revendications précédentes, **caractérisé en ce que** plusieurs capteurs sont analysés, lesquels sont en particulier disposés en un réseau, les différences de sensibilité $S_\varphi$ des capteurs pour la masse et des mouillages par fluide étant réduites en pondérant la sensibilité lors de la mesure sur des fréquences différentes.

**4.** Procédé selon l'une des revendications précédentes, **caractérisé en ce que** plusieurs spectres sont captés et représentés selon une représentation complexe afin de déterminer le signal supplémentaire indépendant de la fréquence et le soustraire du signal de mesure sur une fréquence fixe.

**5.** Procédé selon l'une des revendications précédentes, **caractérisé en ce que** la structure d'électrode d'émission (3a) et la structure d'électrode de réception (3b) sont formées par deux structures à configuration identique.

**6.** Procédé selon l'une des revendications précédentes, **caractérisé en ce que** les structures (3a, 3b) sont formées par des électrodes en peigne, en particulier des IDT.

**7.** Procédé selon l'une des revendications précédentes, **caractérisé en ce que** l'on adopte des mesures techniques grâce auxquelles on évite un contact direct de la substance à mesurer avec les structures d'électrodes.

**8.** Procédé selon l'une des revendications précédentes, **caractérisé en ce que**, grâce à la mesure d'une référence, on détermine le comportement du capteur suite à l'alimentation avec un fluide et l'enregistre en tant que grandeur étalon, **en ce que**, lors de la mesure d'un analyte (5), le signal de mesure est divisé en une composante de signal résultant de la modification de la masse et une composante de signal résultant de la nature du fluide et **en ce que** les composantes de signal sont corrigées de l'ordre de la grandeur étalon.

**9.** Procédé selon la revendication 8, **caractérisé en ce que** l'on utilise un fluide purement visqueux en tant que référence, lequel ne présente pas de parts se liant à la surface du capteur.

**10.** Procédé selon les revendications 8 ou 9, **caractérisé en ce que** l'on utilise en tant que référence un liquide purement visqueux (fluide de Newton) et une solution tant que analyte.

**11.** Procédé selon l'une des revendications 8 à 10 précédentes, **caractérisé en ce que**, en guise de comportement du capteur, on détermine le rapport constant spécifique au capteur entre l'amplitude et le décalage de phase et l'enregistre, moyennant quoi l'on détermine, à partir du rapport entre l'amplitude et le décalage de phase, le vecteur unitaire $\underline{e}$ avec les composantes

$$e_1 = \frac{\Delta\varphi_\nu}{\sqrt{(\Delta\varphi_\nu)^2 + (\Delta\ln(I))^2}} \quad \text{et} \quad e_2 = -\frac{\Delta\ln I}{\sqrt{(\Delta\varphi_\nu)^2 + (\Delta\ln(I))^2}}$$

et moyennant quoi l'on calcule avec le vecteur unitaire $\underline{e}$ les composantes

$$\Delta\varphi_{masse}(t) \frac{e_2\varphi(t) - e_1\ln I(t)}{e_2} \quad \text{et} \quad \Delta\varphi_{\text{viscosité}}(t) = -\frac{\ln I(t)}{e_2}$$

qui s'additionnent au signal global $\Delta\varphi(t)$.

Fig. 1

EP 1 577 667 B1

Fig. 2

a)

$$Z_{Zu}$$

$$\Delta\varphi/\ \Delta A$$

$$Z = Z_N + Z_{Zu}$$

b)

*Fig. 3*

*Fig. 4*

**Fig.5**

**Fig. 6**

Fig. 7

**Fig. 8**

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

* US 5235235 A

**In der Beschreibung aufgeführte Nicht-Patentliteratur**

* **RICCO A. et al.** Multiple-frequency surface acoustic wave devices as sensors. *IEEE Solid state sens actuator workshop; Technical Digest, 1990 solid-state sensor and actuator workshop,* 04. Juni 1990, vol. 90

* **MARTIN et al.** *Anal. Chem.,* 1991, vol. 63, 2272